# EUROPEAN PATENT APPLICATION

(11) **EP 3 486 687 A1**
(43) Date of publication of application: **22.05.2019**
(21) Application number: 17202792.2
(22) Date of filing: 21.11.2017
(51) Int. Cl.: G01S 19/24, G01S 19/32

(54) **GNSS DEVICE WITH IMPROVED CROSS-CORRELATION IMMUNITY**

(71) Applicant: Intel IP Corporation, Santa Clara, CA 95054 (US)
(72) Inventor: HAREL, Ran, 7203402 Ramla M (IL)
(74) Representative: Lambsdorff & Lange Patentanwälte Partnerschaft mbB

(57) **Abstract**

This disclosure relates to a location positioning device, e.g. a Global Navigation Satellite System (GNSS) device, comprising: an analog front end (AFE) configured to: receive first and second navigation signal components transmitted by a satellite vehicle (SV), lowering the sampling rate of the first and second navigation signal components to a sampling rate of a baseband signal, and convert the first and second navigation signal components at the sampling rate of the baseband signal into digital domain to form a digital baseband first and second navigation signal components; and a baseband processor configured to determine a positioning measurement based on a combination of the digital baseband first and second navigation signal components.

## Description

### FIELD

The disclosure relates to Global Navigation Satellite System (GNSS) devices and methods with improved cross-correlation immunity. In particular, the disclosure relates to techniques for improved GNSS L1/E1 cross-correlation immunity in presence of L5/E5A/E5B signals.

### BACKGROUND

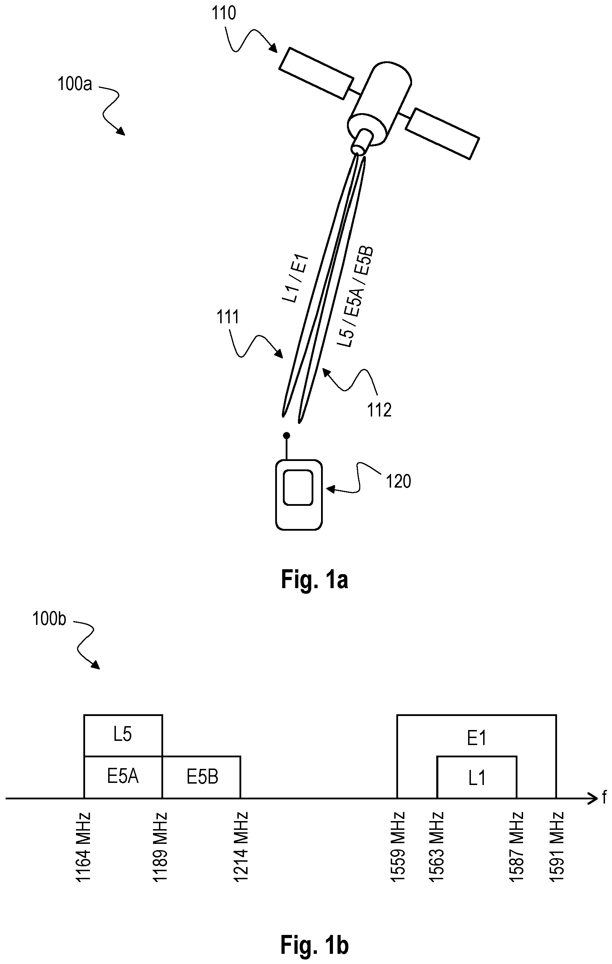

In the GNSS domain, L5/E5A/E5B signals and spectrum are becoming more and more in use by commercial devices for their higher accuracy capabilities with x10 chip rate (10230 chips per millisecond) and stronger signal levels which are stronger in 3-5 dB than L1/E1 spectrum (see Figs. 1a and 1b). In the existing solutions, commercial GNSS devices mostly use L1/E1 signals for navigation. Advanced GNSS signals such as L5/E5A/E5B signals are mainly used to produce a separate set of measurements which together with the L1/E1 measurements are used for multi-path mitigation and ionosphere-troposphere corrections. In such GNSS devices the heuristics and strategies to determine the L5/E5A/E5B usage are mainly focused on scenarios where L1/E1 signals are jammed or blanked, enabling L5/E5A/E5B signals to be searched and tracked in case device's resources are available to support these signals. In many power efficient modes L5/E5A/E5B signals search and track will be disabled as these signals increase the power consumption. The devices which support these advanced signals can search and track L1/E1 and L5/E5A/E5B signals concurrently, whereas each signal is routed separately from different RF chains up to the baseband and measurement engine which is responsible of finding each SVs frequency and code phase in time in order to track these signals.

GNSS cross-correlation for L1/E1 spectrum are mainly tested with AGNSS Dynamic range tests, in which a strong signal satellite is cross correlating and interfering with low level signal satellite. Cross-correlation effect for GNSS L1/E1 is considered at 23-24 db, and for GLONASS 21 db. This effect can interfere with searching and tracking the low level signals as the stronger signal projects its frequency and data bits into the lower level signals.

Consequently, the current methods suffer from poor L1/E1 cross-correlation immunity in the presence of L5/E5A/E5B signals. The disclosure presents techniques to improve such cross-correlation immunity.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1a is a schematic diagram illustrating a Global Navigation Satellite System (GNSS) 100a.
Fig. 1b is a schematic diagram illustrating a frequency spectrum 100b of L1, E1, L5, E5A and E5B navigation signal components.
Fig. 2 is a block diagram illustrating an exemplary GNSS device 200 according to the disclosure.
Fig. 3 is a block diagram illustrating an exemplary combination block 310 for a GNSS device according to the disclosure.
Fig. 4 is a block diagram illustrating an exemplary location positioning device, e.g. a GNSS device 400 according to the disclosure.
Fig. 5 is a schematic diagram illustrating a method 500 for determining a positioning measurement according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
- GNSS:: Global Navigation Satellite System
- SV:: Satellite Vehicle
- E1:: Galileo E1 navigation signal (1559-1591 MHz)
- L1:: GPS L1 navigation signal (1563-1587 MHz)
- E5A:: Galileo E5A navigation signal (1164-1189 MHz)
- E5B:: Galileo E5B navigation signal (1189-1214 MHz)
- L5:: GPS L5 navigation signal (1164-1189 MHz)
- I:: In-phase component
- Q:: Quadrature component
- IAD:: Integrate and dump
- MCPS: million chips per seconds

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in GNSS receivers, GNSS chipsets or GNSS combo chips, stand-alone GNSS devices, embedded GNSS systems or GNSS receivers implemented in mobile devices such as Smartphones, tablets, wearable devices, health monitoring systems, laptops and computers and/or WiFi devices.

These devices may operate in wireless communication networks or stand-alone. The communication networks may be implemented based on mobile communication standards such as LTE, in particular LTE-A and/or OFDM and successor standards such as 5G, or based on high speed wireless communication standards from the 802.11 family according to the WiFi alliance, e.g. 802.11ad and successor standards. The GNSS devices described below may be implemented in electronic devices such as cellular handsets and mobile or wireless devices. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

A main idea of the disclosure is to use a combination of L1/E1 and L5/E5A/E5B signals in base-band level to gain better cross-correlation immunity for L1/E1 signals. Side effects of such mechanism will also improve L1/E1 acquisition and tracking sensitivity using L5/E5A/E5B signals in base-band level.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense. In the following, techniques are described that apply signal downsampling or signal decimation. In digital signal processing, decimation is the process of reducing the sampling rate of a signal. The term downsampling usually refers to one step of the process, but sometimes the terms are used interchangeably. Complementary to upsampling, which increases sampling rate, decimation is a specific case of sample rate conversion in a multi-rate digital signal processing system. A system component that performs decimation is called a decimator.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

Fig. 1a illustrates a Global Navigation Satellite System (GNSS) 100a, and Fig. 1b illustrates a frequency spectrum 100b of L1, E1, L5, E5A and E5B navigation signal components that may be used in the GNSS system of Fig. 1a.

The GNSS system 100a includes a GNSS device 120 that receives a first navigation signal component 111 (e.g. L1/E1) from a satellite vehicle (SV) 110 and a second navigation signal component 112 (e.g. L5/E5A/E5B) from the same SV. The L1 navigation signal is a GPS navigation signal located in an upper L frequency band between 1563 MHz and 1587 MHz. The E1 navigation signal is a Galileo navigation signal located in the upper L frequency band between 1559 MHz and 1591 MHz, i.e. overlapping the L1 band. The L5 navigation signal is a GPS navigation signal located in a lower L frequency band between 1164 MHz and 1189 MHz. The E5A navigation signal is a Galileo navigation signal located in the same lower L frequency band, i.e. between 1164 MHz and 1189 MHz. The E5B navigation signal is a Galileo navigation signal located in the lower L frequency band between 1189 MHz and 1214 MHz.

GNSS cross-correlation for L1/E1 spectrum are mainly tested with AGNSS dynamic range tests, in which a strong signal satellite is cross correlating and interfering with low level signal satellite. Cross-correlation effect for GNSS L1/E1 is considered at 23-24 db, and for GLONASS 21 db. This effect can interfere with searching and tracking the low level signals as the stronger signal projects its frequency and data bits into the lower level signals.

As of today L1/E1 signal acquisition sensitivity is mandated by SVs L1/E1 transmission signal power and 50 Hz data bits spreading. Following L5/E5A/E5B signal acquisition sensitivity is mandated by SVs L5/E5A/E5B transmission signal power (which is 6-8 dB stronger than L1/E1); 10/20 secondary code spreading in the pilot and data channels; and data bits spreading in data signals (pilot channel does not carry data bits).

These secondary codes and data demodulation are degrading L5/E5A/E5B acquisition sensitivity to a level much below GNSS L1/E1 acquisition levels (5-6 db less). Only after secondary code wipe off and data bits removal L5/E5A/E5B signals frequency and code phase can be tracked to the extent which they were supposed to be used for.

The techniques described in this disclosure improve L1/E1 cross-correlation immunity in the presence of L5/E5A/E5B signals.

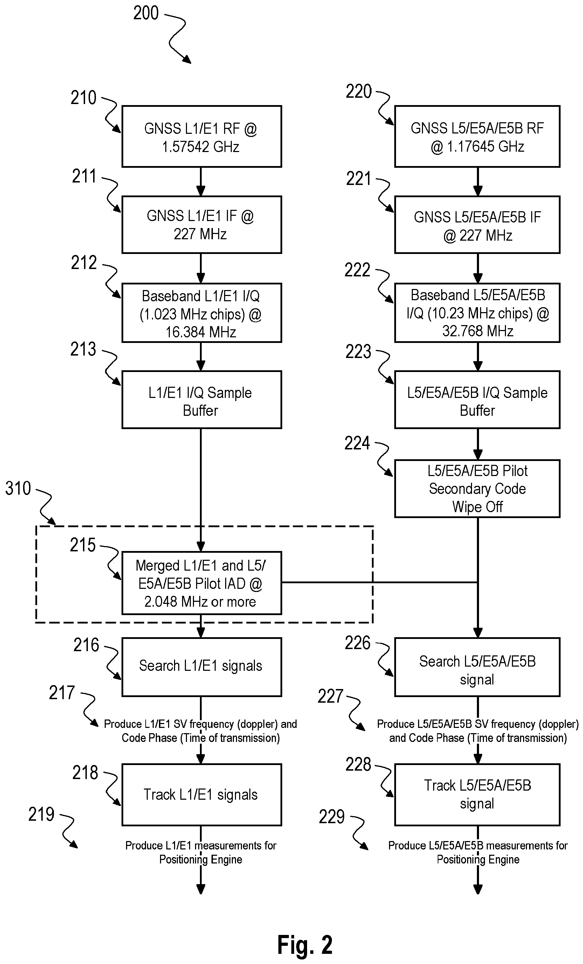

Fig. 2 is a block diagram illustrating an exemplary GNSS device 200 according to the disclosure. The GNSS device 200 includes a first navigation signal processing path (left side blocks of Fig. 2) with blocks 210, 211, 212, 213, 215, 216 and 218 for processing the first navigation signal component L1/E1. The GNSS device 200 further includes a second navigation signal processing path (right side blocks of Fig. 2) with blocks 220, 221, 222, 223, 224, 226 and 228 for processing the second navigation signal component L5/E5A/E5B.

In the first navigation signal processing path, the processing block 210 receives the first GNSS navigation signal component L1/E1 at an exemplary frequency of 1.57542 GHz from an antenna port. The processing block 210 down-samples the signal to intermediate frequency (IF) of e.g. 227 MHz. The processing block 210 (GNSS L1/E1 RF @ 1.57542 GHz) is implemented in the analog domain realizing the GNSS Front end which is directly connected to the L1/E1 GNSS antenna.

In the second navigation signal processing path, the processing block 220 receives the second GNSS navigation signal component L5/E5A/E5B at an exemplary frequency of 1.1764 GHz from an antenna port. The processing block 220 down-samples the signal to intermediate frequency (IF) of e.g. 227 MHz. The processing block 220 (GNSS L5/E5A/E5B RF @ 1.1764 GHz) is implemented in the analog domain realizing the GNSS front end which is directly connected to the L5/E5A/E5B GNSS antenna.

In the first navigation signal processing path, the processing block 211 downsamples or lowering the sampling rate of the first GNSS navigation signal component L1/E1 to the sampling rate of a baseband signal. The processing block 211 (GNSS L1/E1 IF @ 227 MHz) is implemented in the analog domain realizing the GNSS L1/E1 intermediate frequency in which measurements are down sampled towards L1/E1 baseband. Typical IF sample rates are in the hundreds of MHz.

In the second navigation signal processing path, the processing block 221 downsamples the second GNSS navigation signal component L5/E5A/E5B to baseband. The processing block 221 (GNSS L5/E5A/E5B IF @ 227 MHz) is implemented in the analog domain realizing the GNSS L5/E5A/E5B intermediate frequency in which measurements are down sampled towards L5/E5A/E5B baseband. Typical IF sample rates are in the hundreds of MHz.

In the first navigation signal processing path, the processing block 212 converts the first GNSS navigation signal into digital domain. It provides in-phase and quadrature values I/Q at e.g. 1.023 MHz chips sampled from A/D at e.g. 16.384 MHz. The processing block 212 (L1/E1 baseband I/Q samples (1.023 MCPS) @ 16.384 MHz) is implemented in the digital domain.

In the second navigation signal processing path, the processing block 222 converts the second GNSS navigation signal into digital domain. It provides in-phase and quadrature values I/Q at e.g. 10.23 MHz chips sampled from A/D at e.g. 32.768 MHz. The processing block 222 (L5/E5A/E5B baseband I/Q samples (10.23 MCPS) @ 32.768 MHz) is implemented in the digital domain.

In the first navigation signal processing path, the block 213 is a sample buffer in the digital domain for buffering the digital samples of the first GNSS navigation signal. The processing block 213 (L1/E1 sample buffer - digital domain) is used to hold baseband I/Q samples towards Integrate and Dump.

In the second navigation signal processing path, the block 223 is a sample buffer in the digital domain for buffering the digital samples of the second GNSS navigation signal. The processing block 223 (L5/E5A/E5B sample buffer - digital domain) is used to hold baseband I/Q samples towards Secondary Code Wipe-off mechanism and Integrate and Dump.

In the second navigation signal processing path, the block 224 is a sample buffer used to perform pilot channel secondary code wipe off. The block 224 (L5/E5A/E5B pilot channel secondary code wipe-off - digital domain) is implemented in the digital domain and used to hold baseband I/Q samples towards Integrate and Dump.

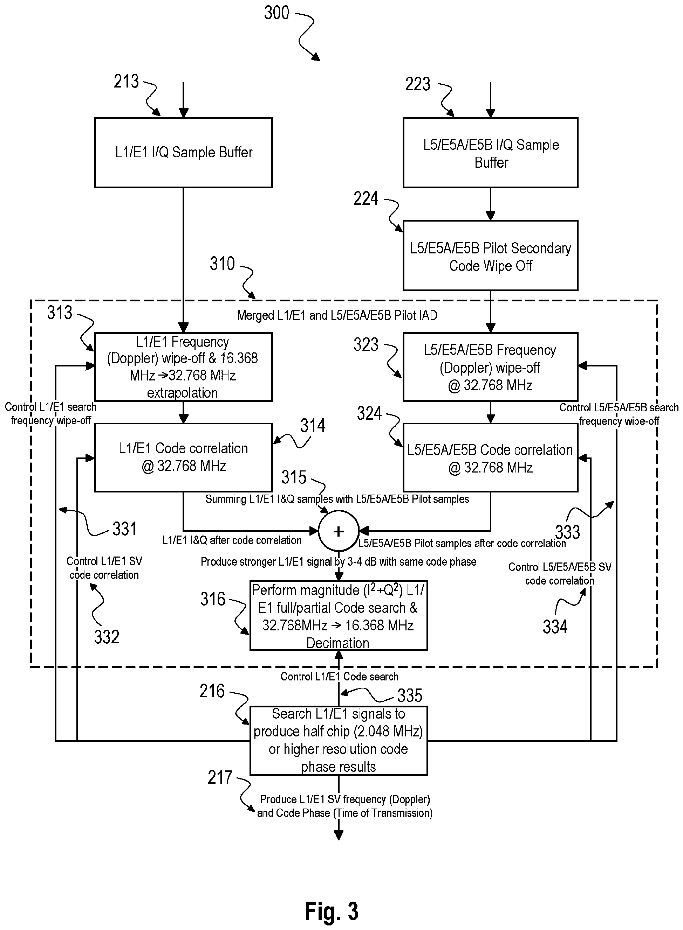

In the first navigation signal processing path, the block 215 is a pilot code correlation and frequency wipe off integrate and dump block implemented in the digital domain. The block 215 (L1/E1 and L5/E5A/E5B pilot code correlation and frequency wipe-off IAD (Integrate and Dump) - digital domain) is implemented in the digital domain. This block 215 represents the basic processing according to this disclosure to improve cross-correlation immunity of the GNSS receiver. A block 310 that includes this processing block 215 is described in detail below with respect to Fig. 3.

The processing block 215 combines both, the first navigation signal component (L1/E1) processed by the first navigation signal path and the second navigation signal component (L5/E5A/E5B) processed by the second navigation signal path. The processing of block 215 benefits from the fact that the L1/E1 and L5/E5A/E5B signals are generated from the same SV which carries almost same frequency (Doppler) to be wiped-off and almost same code phase to search for in the Integrate and Dump mechanism. Combining both signals in I/Q level can generate stronger signal levels than L1/E1 signals.

In the first navigation signal processing path, the processing block 216 (arranged after the block 215) searches the first navigation signal component (L1/E1) to produce L1/E1 SV frequency (Doppler) and code phase (time of transmission) 217. These L1/E1 SV frequency (Doppler) and code phase are input to the processing block 218 which tracks the L1/E1 signal to produce L1/E1 measurements for positioning measurements (e.g. by a positioning engine).

In the second navigation signal processing path, the processing block 226 (arranged after the block 224) searches the second navigation signal component (L5/E5A/E5B) to produce L5/E5A/E5B SV frequency (Doppler) and code phase (time of transmission) 227. These L5/E5A/E5B SV frequency (Doppler) and code phase are input to the processing block 228 which tracks the L5/E5A/E5B signal to produce L5/E5A/E5B measurements for positioning measurements (e.g. by the positioning engine).

The GNSS device 200 provides an improved GNSS L1/E1 cross-correlation immunity in presence of L5/E5A/E5B signals in the measurement engine with the capability to use both signals in baseband level and gain from the alignment between both signals which are transmitted from same SV. The frequency (Doppler effect) and time of transmission (ToT)/code phase of these signals are aligned for being generated from the same SV.

The solution thus provides a method and device of increasing L1/E1 cross-correlation immunity in presence of L5/E5A/E5B signals by about 3-4 db. The Measurement Engine acquisition and tracking mechanisms can be defined to enhance L1/E1 base band signals and use combined integrate and dump (IAD) module with L5/E5A/E5B pilot signals. These definitions include the combined IAD changes which can be used in accordance to each signal spectrum.

As L5/E5A/E5B signals have been enabled in very recent years and consume lots of hardware resources and power to handle, not many commercial devices use these signals. The Q-channel of the L5/E5A/E5B signal carries no data, transmitting only a secondary code modulated pilot signal which can be used to integrate with L1/E1 signals.

While in the existing GNSS devices architecture, L5/E5A/E5B signals are used to produce a separate set of the satellites pseudo measurements to be used by the positioning engine, the GNSS devices presented in this disclosure use such signals to improve L1/E1 sensitivity.

Fig. 3 is a block diagram illustrating an exemplary combination block 310 for a GNSS device 300 according to the disclosure.

The combination block 310 is an example of the block 310 including the block 215, i.e. the pilot code correlation and frequency wipe off integrate and dump block implemented in the digital domain as described above with respect to Fig. 2. The other blocks 213, 223, 224, 216 depicted in Fig. 3 correspond to the respective blocks 213, 223, 224, 216 as described above with respect to Fig. 2.

The combination block 310 is coupled with the first navigation signal processing path, i.e. with processing block 213 and with the second navigation signal processing path, i.e. with processing block 224 as described above with respect to Fig. 2.

The combination block 310 includes a first navigation signal processing path with blocks 313, 314, a second navigation signal processing path with blocks 323, 324 and a combined navigation signal processing path with blocks 315 and 316 which is coupled to block 216.

In the first navigation signal processing path, the processing block 313 (arranged after block 213) is used to wipe off the first navigation signal component, L1/E1 I/Q samples, which are buffered in the sample buffer 213, from L1/E1 frequency (Doppler) and the processing block 314 is used to correlate (e.g. by XOR-oriented correlation) these samples with the L1/E1 satellite code which is searched.

In the second navigation signal processing path, the processing block 323 (arranged after block 224) is used to wipe off the second navigation signal component, L5/E5A/E5B Pilot (Q) samples, which are buffered in the sample buffer 223, from L5/E5A/E5B frequency (Doppler) and the processing block 324 is used to correlate (e.g. by XOR-oriented correlation) these samples with the L5/E5A/E5B satellite code which is searched.

After the codes and Doppler frequencies have been wiped off, i.e. cancelled or compensated, the satellite magnitude peak should appear in both signals at the same time offset. Meaning after adding both I and Q of both signals a stronger signal of more than 3-4 db with the same peak should emerge, such peak will have better immunity to cross correlation signals for L5/E5A/E5B enhanced signal immunity injected/combined with the L1/E1 signals. The IAD (Integrate and Dump) block 316 is summing separately the I and Q values of the correlation into one magnitude of I²+Q². L1/E1 half chip resolution or higher can be achieved by exploring each 2048 values, for example, which are summed up and magnitude is generated for each different code phase and frequency options.

The IAD block 316 performs L1/E1 search for the best code and frequency couple by strongest magnitude sorting. This can be done for each L1/E1 SV with the correspondence L5/E5A/E5B producing lots of candidates in which the strongest candidates are taken into qualification in the track or qualification engines.

After acquiring the strongest candidates, L1/E1 tracking can use the same techniques of combining L5/E5A/E5B with L1/E1 signals in the integrate and dump mechanism (IAD) 316 as described above to achieve better L1/E1 device tracking sensitivity.

The IAD block 316 may be controlled by the processing block 216 providing a control signal 335 for controlling L1/E1 code search. The processing block 216 may also control the other processing blocks 313, 314, 323, 324 by providing respective control signals 331, 332, 333, 334.

A main aspect of the GNSS device 300 according to the disclosure is that both L1/E1 and L5/E5A/E5B signals are transmitted from the same satellite and generated by the same atomic clock producing the same code offset and Doppler frequency to both signals (L5/E5 Doppler might be slightly offset and will be compensated by the details described herein).

As described above, L5/E5A/E5B secondary code wipe off is taking place on the sampled buffer values before any integration and correlation is performed. This mechanism is achievable once SV millisecond boundary is known which can be achieved and supported in lots of GNSS Hot/Cold start scenarios. As described above with respect to the combined IAD (block 316), the I values after correlation and Q values after correlation of L1/E1 signals are added with the L5/E5A/E5B I and Q signals after L1/L5 frequency mismatch and code correlation has been demodulated from the L5/E5A/E5B signals to produce 2048 correlations with larger magnitude of values.

These correlation values can then be summed up to generate the combined taps of L1+L5 Pilot or E1+E5A/E5B Pilot and generate stronger results than L1 only taps.

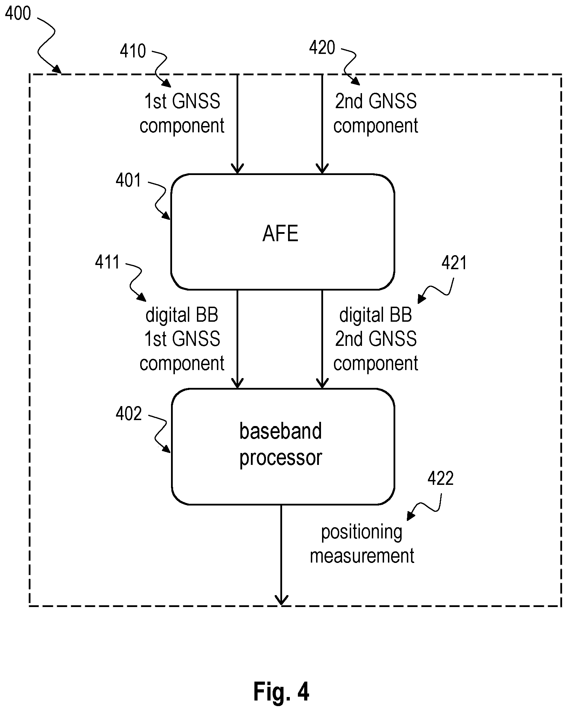

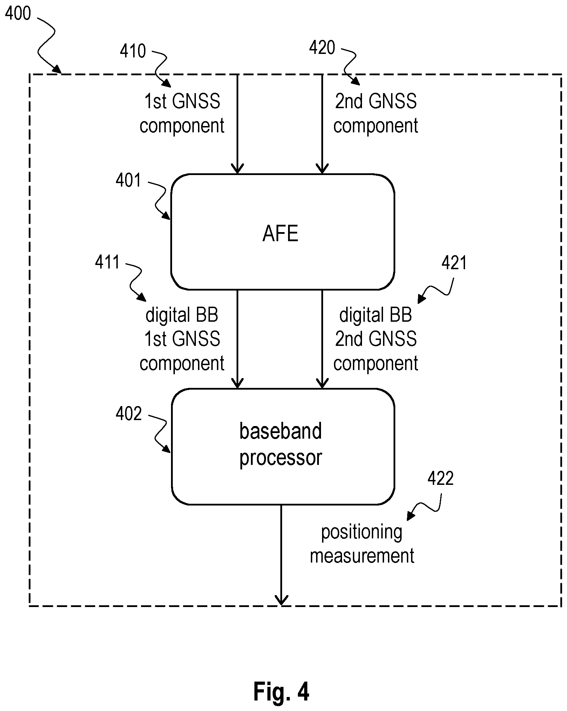

Fig. 4 is a block diagram illustrating an exemplary location positioning device, e.g. a GNSS device 400, according to the disclosure. The GNSS device 400 is a general representation of the GNSS devices 200 and 300 described above with respect to Figs. 2 and 3. The GNSS device 400 includes an analog front end (AFE) 401 and a baseband processor 402. The AFE 401 is configured to: receive first 410 and second 420 navigation signal components transmitted by a satellite vehicle (SV), lowering the sampling rate, e.g. by downsampling, the first 410 and second 420 navigation signal components to a sampling rate of a baseband signal, and to convert the first and second navigation signal components at the sampling rate of the baseband signal into digital domain 411, 421 to form digital baseband first and second navigation signal components. The baseband processor 402 is configured to determine a positioning measurement 422 based on a combination of the digital baseband first 411 and second 421 navigation signal components.

The AFE 401 may for example perform the processing of the blocks 210, 211, 212, 220, 221 and 222 as described above with respect to Fig. 2. The baseband processor 402 may for example perform the processing of the blocks 213, 223, 224, 215, 216, 226, 218 and 228 as described above with respect to Figs. 2 and 3.

The first 410 and second 420 navigation signal components are transmitted from the same SV and may be generated based on a same atomic clock. The first navigation signal component 410 may be one of an L1 or E1 signal, e.g. as described above with respect to Figs. 1 to 3. The second navigation signal component 420 may be one of an L5 or E5A or E5B signal, e.g. as described above with respect to Figs. 1 to 3.

The combination of the digital baseband first 411 and second 421 navigation signal components may be based on a summing operation, e.g. as described above with respect to Figs. 2 and 3. The summing operation may be based on squared in-phase values and squared quadrature values, e.g. I and Q values as described above with respect to Figs. 2 and 3.

A Q-channel (quadrature values) of the digital baseband second 420 navigation signal component may carry no data. The Q-channel of the digital baseband second 421 navigation signal component may transmit a secondary code modulated pilot signal, e.g. as described above with respect to Figs. 2 and 3. The baseband processor 402 may be configured to wipe off the secondary code from the pilot signal before combining the digital baseband first 411 and second 421 navigation signal components.

The baseband processor 402 may remove data bits spreading in data channels of the second navigation signal component 420 before combining the digital baseband first 410 and second 420 navigation signal components. The baseband processor 402 may wipe off the digital baseband first navigation signal component 411 from a first component Doppler frequency before combining the digital baseband first 411 and second 421 navigation signal components.

The baseband processor 402 may correlate the digital baseband first 411 navigation signal component wiped off from the first component Doppler frequency with a known first component satellite code before combining the digital baseband first 411 and second 421 navigation signal components. The baseband processor 402 may wipe off the digital baseband second 421 navigation signal component from a second component Doppler frequency before combining the digital baseband first 411 and second 421 navigation signal components.

The baseband processor 402 may correlate the digital baseband second 421 navigation signal component wiped off from the second component Doppler frequency with a known second component satellite code before combining the digital baseband first 411 and second 421 navigation signal components.

The baseband processor 402 may add in-phase values I of both the correlated digital baseband first 411 navigation signal component and the correlated digital baseband second 421 navigation signal component, and add quadrature values Q of both the correlated digital baseband first 411 navigation signal component and the correlated digital baseband second 421 navigation signal component.

The baseband processor 402 may determine a magnitude of the added in-phase values I and the added quadrature values Q. The magnitude may be based on the relation I²+Q², wherein I denotes the added in-phase values and Q denotes the added quadrature values.

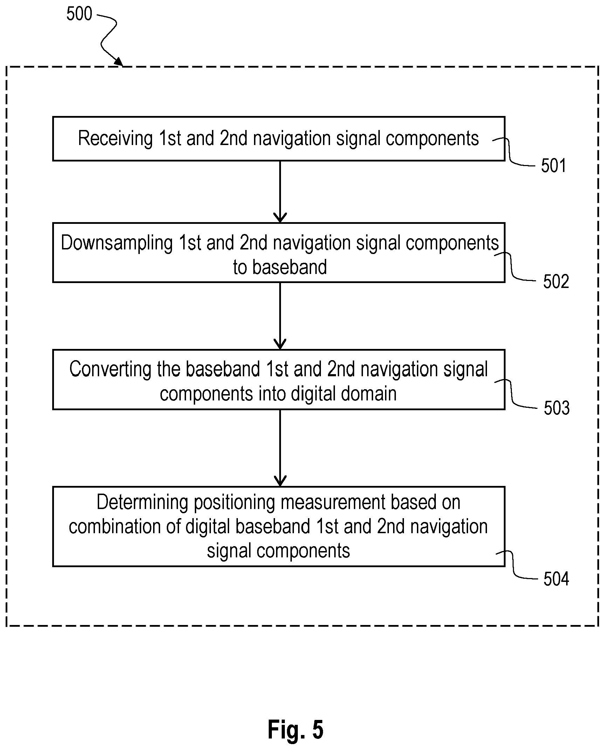

Fig. 5 is a schematic diagram illustrating a method 500 for determining a positioning measurement according to the disclosure. The method 500 describes the processing for a location positioning device such as a GNSS device, e.g. for the GNSS device 400 with AFE 401 and baseband processor 402 as described above with respect to Fig. 4 or for a GNSS device 200, 300 as described above with respect to Figs. 2 and 3.

The method 500 includes receiving 501 first 410 and second 420 navigation signal components transmitted by a satellite vehicle (SV). The method 500 further includes lowering the sampling rate, e.g. by downsampling 502, of the first 410 and second 420 navigation signal components to a sampling rate of a baseband signal. The method 500 further includes converting 503 the first and second navigation signal components at the sampling rate of the baseband signal into digital domain 411, 421 to form digital baseband first and second navigation signal components. The method 500 further includes determining 504 the positioning measurement based on a combination of the digital baseband first 411 and second 421 navigation signal components.

The first 410 and second 420 navigation signal components are transmitted from the same SV and may be generated based on a same atomic clock. The first navigation signal component 410 may be an L1 or E1 signal. The second navigation signal component 420 may be an L5 or E5A or E5B signal.

The combination of the digital baseband first 411 and second 421 navigation signal components may be based on a summing operation. The summing operation may be based on squared in-phase values and squared quadrature values.

A Q-channel of the digital baseband second 421 navigation signal component may carry no data. The Q-channel of the digital baseband second 421 navigation signal component may transmit a secondary code modulated pilot signal.

The method 500 may further include wiping off the secondary code from the pilot signal before combining the digital baseband first and second navigation signal components, e.g. as described above with respect to Figs. 2 and 3.

The method 500 may further include removing data bits spreading in data channels of the second navigation signal component before combining the digital baseband first and second navigation signal components, e.g. as described above with respect to Figs. 2 and 3.

The method 500 may further include wiping off the digital baseband first navigation signal component from a first component Doppler frequency before combining the digital baseband first and second navigation signal components, e.g. as described above with respect to Figs. 2 and 3.

The method 500 may further include correlating the digital baseband first navigation signal component wiped off from the first component Doppler frequency with a known first component satellite code before combining the digital baseband first and second navigation signal components, e.g. as described above with respect to Figs. 2 and 3.

The method 500 may further include wiping off the digital baseband second navigation signal component from a second component Doppler frequency before combining the digital baseband first and second navigation signal components, e.g. as described above with respect to Figs. 2 and 3.

The method 500 may further include correlating the digital baseband second navigation signal component wiped off from the second component Doppler frequency with a known second component satellite code before combining the digital baseband first and second navigation signal components, e.g. as described above with respect to Figs. 2 and 3.

The method 500 may further include adding in-phase values of both the correlated digital baseband first navigation signal component and the correlated digital baseband second navigation signal component; and adding quadrature values of both the correlated digital baseband first navigation signal component and the correlated digital baseband second navigation signal component, e.g. as described above with respect to Figs. 2 and 3.

The method 500 may further include determining a magnitude of the added in-phase values and the added quadrature values. The magnitude may be based on the relation I²+Q², wherein I denotes the added in-phase values and Q denotes the added quadrature values, e.g. as described above with respect to Figs. 2 and 3.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the blocks described above with respect to Figs. 2 to 4 and the method 500 described above with respect to Fig. 5. Such a computer program product may include a non-transient readable storage medium storing program code thereon for use by a processor, the program code comprising instructions for performing the methods or the computing blocks as described above.

### EXAMPLES

The following examples pertain to further embodiments. Example 1 is a location positioning device, comprising: an analog front end (AFE) configured to: receive first and second navigation signal components transmitted by a satellite vehicle (SV), lowering the sampling rate of the first and second navigation signal components to a sampling rate of a baseband signal, and convert the first and second navigation signal components at the sampling rate of the baseband signal into digital domain to form digital baseband first and second navigation signal components; and a baseband processor configured to determine a positioning measurement based on a combination of the digital baseband first and second navigation signal components.

In Example 2, the subject matter of Example 1 can optionally include that the first and second navigation signal components are transmitted from a same SV and generated based on a same atomic clock.

In Example 3, the subject matter of any one of Examples 1-2 can optionally include that the first navigation signal component is an L1 or E1 signal; and that the second navigation signal component is an L5 or E5A or E5B signal.

In Example 4, the subject matter of any one of Examples 1-3 can optionally include that the combination of the digital baseband first and second navigation signal components is based on a summing operation.

In Example 5, the subject matter of Example 4 can optionally include that the summing operation is based on squared in-phase values and squared quadrature values.

In Example 6, the subject matter of any one of Examples 1-5 can optionally include that a Q-channel of the digital baseband second navigation signal component carries control data.

In Example 7, the subject matter of Example 6 can optionally include that the Q-channel of the digital baseband second navigation signal component transmits a secondary code modulated pilot signal.

In Example 8, the subject matter of Example 7 can optionally include that the baseband processor is configured to wipe off the secondary code from the pilot signal before combining the digital baseband first and second navigation signal components.

In Example 9, the subject matter of any one of Examples 1-8 can optionally include that the baseband processor is configured to remove data bits spreading in data channels of the second navigation signal component before combining the digital baseband first and second navigation signal components.

In Example 10, the subject matter of any one of Examples 1-9 can optionally include that the baseband processor is configured to wipe off the digital baseband first navigation signal component from a first component Doppler frequency before combining the digital baseband first and second navigation signal components.

In Example 11, the subject matter of Example 10 can optionally include that the baseband processor is configured to correlate the digital baseband first navigation signal component wiped off from the first component Doppler frequency with a known first component satellite code before combining the digital baseband first and second navigation signal components.

In Example 12, the subject matter of Example 11 can optionally include that the baseband processor is configured to wipe off the digital baseband second navigation signal component from a second component Doppler frequency before combining the digital baseband first and second navigation signal components.

In Example 13, the subject matter of Example 12 can optionally include that the baseband processor is configured to correlate the digital baseband second navigation signal component wiped off from the second component Doppler frequency with a known second component satellite code before combining the digital baseband first and second navigation signal components.

In Example 14, the subject matter of Example 13 can optionally include that the baseband processor is configured to: add in-phase values of both the correlated digital baseband first navigation signal component and the correlated digital baseband second navigation signal component, and add quadrature values of both the correlated digital baseband first navigation signal component and the correlated digital baseband second navigation signal component.

In Example 15, the subject matter of Example 14 can optionally include that the baseband processor is configured to determine a magnitude of the added in-phase values and the added quadrature values.

In Example 16, the subject matter of Example 15 can optionally include that the magnitude is based on the relation I²+Q², wherein I denotes the added in-phase values and Q denotes the added quadrature values.

Example 17 is a method for determining a positioning measurement, the method comprising: receiving first and second navigation signal components transmitted by a satellite vehicle (SV); lowering the sampling rate of the first and second navigation signal components to sampling rate of a baseband signal; converting the first and second navigation signal components at the sampling rate of the baseband signal into digital domain to form digital baseband first and second navigation signal components; and determining the positioning measurement based on a combination of the digital baseband first and second navigation signal components.

In Example 18, the subject matter of Example 17 can optionally include that the first and second navigation signal components are transmitted from a same SV and generated based on a same atomic clock.

In Example 19, the subject matter of any one of Examples 17-18 can optionally include that the first navigation signal component is one of an L1 or E1 signal; and that the second navigation signal component is one of an L5 or E5A or E5B signal.

In Example 20, the subject matter of any one of Examples 17-19 can optionally include that the combination of the digital baseband first and second navigation signal components is based on a summing operation.

In Example 21, the subject matter of Example 20 can optionally include that the summing operation is based on squared in-phase values and squared quadrature values.

In Example 22, the subject matter of any one of Examples 17-21 can optionally include that a Q-channel of the digital baseband second navigation signal component carries control data.

In Example 23, the subject matter of Example 22 can optionally include that the Q-channel of the digital baseband second navigation signal component transmits a secondary code modulated pilot signal.

In Example 24, the subject matter of Example 23 can optionally include wiping off the secondary code from the pilot signal before combining the digital baseband first and second navigation signal components.

In Example 25, the subject matter of any one of Examples 17-24 can optionally include removing data bits spreading in data channels of the second navigation signal component before combining the digital baseband first and second navigation signal components.

In Example 26, the subject matter of any one of Examples 17-25 can optionally include wiping off the digital baseband first navigation signal component from a first component Doppler frequency before combining the digital baseband first and second navigation signal components.

In Example 27, the subject matter of Example 26 can optionally include correlating the digital baseband first navigation signal component wiped off from the first component Doppler frequency with a known first component satellite code before combining the digital baseband first and second navigation signal components.

In Example 28, the subject matter of Example 27 can optionally include wiping off the digital baseband second navigation signal component from a second component Doppler frequency before combining the digital baseband first and second navigation signal components.

In Example 29, the subject matter of Example 28 can optionally include correlating the digital baseband second navigation signal component wiped off from the second component Doppler frequency with a known second component satellite code before combining the digital baseband first and second navigation signal components.

In Example 30, the subject matter of Example 29 can optionally include: adding in-phase values of both the correlated digital baseband first navigation signal component and the correlated digital baseband second navigation signal component; and adding quadrature values of both the correlated digital baseband first navigation signal component and the correlated digital baseband second navigation signal component.

In Example 31, the subject matter of Example 30 can optionally include determining a magnitude of the added in-phase values and the added quadrature values.

In Example 32, the subject matter of Example 31 can optionally include that the magnitude is based on the relation I²+Q², wherein I denotes the added in-phase values and Q denotes the added quadrature values.

Example 33 is a Global Navigation Satellite System (GNSS) circuitry, comprising: a first sample buffer configured to buffer a first navigation signal component transmitted by a satellite vehicle (SV); a second sample buffer configured to buffer a second navigation signal component transmitted by the satellite vehicle (SV); and a processor configured to determine a positioning measurement based on a combination of the first navigation signal component and the second navigation signal component.

In Example 34, the subject matter of Example 33 can optionally include that the first navigation signal component is one of an L1 or E1 signal; and that the second navigation signal component is one of an L5 or E5A or E5B signal.

In Example 35, the subject matter of any one of Examples 33-34 can optionally include that the combination of the first navigation signal component and the second navigation signal component is based on a summing operation.

In Example 36, the subject matter of Example 35 can optionally include that the summing operation is based on squared in-phase values and squared quadrature values.

In Example 37, the subject matter of any one of Examples 33-36 can optionally include that a Q-channel of the second navigation signal component carries no data.

In Example 38, the subject matter of Example 37 can optionally include that the Q-channel of the second navigation signal component transmits a secondary code modulated pilot signal.

In Example 39, the subject matter of Example 38 can optionally include that the processor is configured to wipe off the secondary code from the pilot signal before combining the first and second navigation signal components.

In Example 40, the subject matter of any one of Examples 33-39 can optionally include that the processor is configured to remove data bits spreading in data channels of the second navigation signal component before combining the first and second navigation signal components.

Example 41 is a Global Navigation Satellite System (GNSS), comprising: an analog front end (AFE) component configured to: receive first and second navigation signal components transmitted by a satellite vehicle (SV), downsample the first and second navigation signal components to baseband, and convert the baseband first and second navigation signal components into digital domain; and a baseband processing component configured to determine a positioning measurement based on a combination of the digital baseband first and second navigation signal components.

In Example 42, the subject matter of Example 41 can optionally include that the first and second navigation signal components are transmitted from the same SV and generated based on a same atomic clock.

In Example 43, the subject matter of any one of Examples 41-42 can optionally include that the first navigation signal component is one of an L1 or E1 signal; and that the second navigation signal component is one of an L5 or E5A or E5B signal.

Example 44 is a device for determining a positioning measurement, comprising: means for receiving first and second navigation signal components transmitted by a satellite vehicle (SV); means for downsampling the first and second navigation signal components to baseband; means for converting the baseband first and second navigation signal components into digital domain; and means for determining the positioning measurement based on a combination of the digital baseband first and second navigation signal components.

In Example 45, the subject matter of Example 44 can optionally include that the first and second navigation signal components are transmitted from the same SV and generated based on a same atomic clock.

In Example 46, the subject matter of any one of Examples 44-45 can optionally include that the first navigation signal component is one of an L1 or E1 signal; and that the second navigation signal component is one of an L5 or E5A or E5B signal.

Example 47 is a computer readable non-transitory medium on which computer instructions are stored which when executed by a computer cause the computer to perform the method of any one of Examples 17 to 32.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A location positioning device, comprising:
an analog front end (AFE) configured to:
receive first and second navigation signal components transmitted by a satellite vehicle (SV),
lowering the sampling rate of the first and second navigation signal components to sampling rate of a baseband signal, and
convert the first and second navigation signal components at the sampling rate of the baseband signal into digital domain to form a digital baseband first and second navigation signal components; and
a baseband processor configured to determine a positioning measurement based on a combination of the digital baseband first and second navigation signal components.

2. The location positioning device of claim 1,
wherein the first and second navigation signal components are transmitted from a same SV and generated based on a same atomic clock.

3. The location positioning device of claim 1 or 2,
wherein the first navigation signal component is an L1 or E1 signal; and
wherein the second navigation signal component is an L5 or E5A or E5B signal.

4. The location positioning device of one of the preceding claims,
wherein the combination of the digital baseband first and second navigation signal components is based on a summing operation.

5. The location positioning device of claim 4,
wherein the summing operation is based on squared in-phase values and squared quadrature values.

6. The location positioning device of one of the preceding claims,
wherein a Q-channel of the digital baseband second navigation signal component transmits a secondary code modulated pilot signal.

7. The location positioning device of claim 6,
wherein the baseband processor is configured to wipe off the secondary code from the pilot signal before combining the digital baseband first and second navigation signal components.

8. The location positioning device of one of the preceding claims,
wherein the baseband processor is configured to remove data bits spreading in data channels of the second navigation signal component before combining the digital baseband first and second navigation signal components.

9. The location positioning device of one of the preceding claims,
wherein the baseband processor is configured to wipe off the digital baseband first navigation signal component from a first component Doppler frequency before combining the digital baseband first and second navigation signal components.

10. The location positioning device of claim 9,
wherein the baseband processor is configured to correlate the digital baseband first navigation signal component wiped off from the first component Doppler frequency with a known first component satellite code before combining the digital baseband first and second navigation signal components.

11. The location positioning device of claim 10,
wherein the baseband processor is configured to wipe off the digital baseband second navigation signal component from a second component Doppler frequency before combining the digital baseband first and second navigation signal components.

12. The location positioning device of claim 11,
wherein the baseband processor is configured to correlate the digital baseband second navigation signal component wiped off from the second component Doppler frequency with a known second component satellite code before combining the digital baseband first and second navigation signal components.

13. A method for determining a positioning measurement, the method comprising:
receiving first and second navigation signal components transmitted by a satellite vehicle (SV);
lowering a sampling rate of the first and second navigation signal components to a sampling rate of a baseband signal;
converting the baseband first and second navigation signal components at the sampling rate of the baseband signal into digital domain to form digital baseband first and second navigation signal components; and
determining the positioning measurement based on a combination of the digital baseband first and second navigation signal components.

14. The method of claim 13,
wherein the first and second navigation signal components are transmitted from a same SV and generated based on a same atomic clock.

15. A computer readable non-transitory medium on which computer instructions are stored which when executed by a computer cause the computer to perform the method of claim 13 or 14.
